# EUROPÄISCHE PATENTSCHRIFT

(11) **EP 2 873 083 B1**
(45) Veröffentlichungstag und Bekanntmachung des Hinweises auf die Patenterteilung: **28.03.2018**
(21) Anmeldenummer: 12753970.8
(22) Anmeldetag: 30.08.2012
(51) Int. Cl.: H01H 33/59, H02P 1/02, H02P 3/22, H02P 29/02

(54) **SCHALTGERÄT ZUM STEUERN DER ENERGIEZUFUHR EINES NACHGESCHALTETEN ELEKTROMOTORS**
SWITCHING DEVICE FOR CONTROLLING POWER SUPPLY OF A SUBSEQUENT ELECTRICAL MOTOR
APPAREIL DE COMMUTATION POUR COMMANDER D'ALIMENTATION ASSOCIE& xA;D'UN MOTEUR ÉLECTRIQUE DISPOSÉ EN AVAL

(43) Veröffentlichungstag der Anmeldung: 20.05.2015
(73) Patentinhaber: Siemens Aktiengesellschaft, 80333 München (DE)
(72) Erfinder: HERTZ, Dirk, 92260 Fichtenhof (DE); SCHÖNENBERG, Marco, 92245 Kümmersbruck (DE); SEITZ, Johann, 92224 Amberg (DE); ZITZLER, Stefan, 92421 Schwandorf (DE)
(86) Internationale Anmeldenummer: PCT/EP2012/066881
(87) Internationale Veröffentlichungsnummer: WO 2014/032718

(56) Entgegenhaltungen:
- WO-A1-2007/014725
- DE-A1- 1 415 980
- DE-A1- 2 321 635
- DE-A1- 3 317 964
- DE-A1- 19 601 540
- DE-A1-102006 038 209
- DE-B- 1 227 109

## Beschreibung

Die Erfindung betrifft ein Schaltgerät sowie ein Verfahren des Schaltgeräts. Das erfindungsgemäße Schaltgerät wird insbesondere innerhalb der industriellen Automatisierungstechnik eingesetzt. Das Schaltgerät ist insbesondere ein Motorstarter.

Mittels des Schaltgeräts kann ein dem Schaltgerät nachgeschalteter Elektromotor gesteuert werden. Hierfür wird eine Energieversorgung des dem Schaltgerät nachgeschalteten Elektromotors über das Schaltgerät geführt, so dass der Elektromotor mit einem Versorgungsnetz verbunden ist. Das Versorgungsnetz ist insbesondere ein Niederspannungsnetz einer industriellen Anlage (z.B. drei Phasen, 400 Volt, 50 Hertz).

Zum Steuern der Energieversorgung des nachgeschalteten Elektromotors umfasst das Schaltgerät eine Steuereinheit und eine erste Strombahn. Über die erste Strombahn wird eine erste Phase des Versorgungsnetzes zum nachgeschalteten Elektromotor geführt. Die erste Strombahn umfasst einen ersten elektromechanischen Schalter und eine in Reihe zum ersten Schalter geschaltete Parallelschaltung eines zweiten elektromechanischen Schalters mit einem Halbleiterschalter. Die Steuereinheit kann ein Schaltsignal für den ersten Schalter, den zweiten Schalter und den Halbleiterschalter ausgeben und hierüber den erwünschten Schaltzustand der Schalter steuern. Der erste und zweite Schalter ist insbesondere ein Schließer, welcher bei Vorliegen eines Schaltsignals der Steuereinheit im geschlossenen Schaltzustand gehalten wird. Wird das Schaltsignal vom ersten oder zweiten Schalter abgeschaltet, so nimmt der Schalter automatisch aufgrund einer Rückstellkraft (z.B. eine Federkraft, welche auf einen Kontakt des Schalters wirkt) den geöffneten Zustand ein. Derartige Schalter sind insbesondere Relais. Der Halbleiterschalter nimmt bei Vorliegen des Schaltsignals der Steuereinheit vorzugsweise den elektrisch leitenden Zustand ein.

Das Schaltgerät umfasst einen Versorgungsanschluss, über welchen die Steuereinheit die Energie für die Schaltsignale beziehen kann. Üblicherweise wird eine dezentrale Versorgungsquelle mittels einer Leitung mit dem Versorgungsanschluss des Schaltgeräts verbunden, so dass im aktiven Betrieb des Schaltgeräts eine Versorgungsspannung über den Versorgungsanschluss anliegt. Über den Versorgungsanschluss bezieht das Schaltgerät die für die Schaltsignale erforderliche Energie. Vorzugsweise wird die gesamte geräteinterne Energieversorgung des Schaltgeräts über den Versorgungsanschluss des Schaltgeräts bezogen.

Das Schaltgerät wird vorzugsweise eingesetzt, um Drehstrommotoren und auch Einphasenwechselstrommotoren ein- und auszuschalten und die Motoren gegen Überlastung zu schützen. Vorzugsweise kann das Schaltgerät ebenso in Sicherheitsanwendungen eingesetzt werden. In diesem Fall muss ein sicheres Abschalten des Motors sichergestellt werden.

WO 2007/014725 A1 (Phoenix Contact (DE)) 8. Februar 2007 beschreibt ein Sicherheitsschaltgerät, mit welchem eine sicherheitstechnische Einrichtung, vorzugsweise ein elektrischer Antrieb, in einen sicheren Zustand gesteuert werden kann. Das Sicherheitsschaltgerät weist einen Mikroprozessor oder Mikrocontroller auf, der zum Beispiel einen zu schützenden elektrischen Antrieb sowohl bei Betätigung eines Notaus-, Schutztür- und/oder Zweihand-Schalters als auch bei einem fehlerhaften Betrieb des Sicherheitsschaltgerätes oder des elektrischen Antriebs in einen sicheren Zustand steuern kann. Hierzu ist der Mikroprozessor vorzugsweise derart implementiert, dass er aus wenigstens einem zu messenden Analogsignal ermitteln kann, ob ein vorbestimmter Parameter, vorzugsweise die Amplitude des Analogsignals außerhalb eines vorbestimmten Arbeitsbereichs liegt. Zudem kann der Mikroprozessor Bestandteil einer Sicherheitseinrichtung sein, die zum mehrkanaligen Steuern eines sicherheitstechnischen elektrischen Antriebs ausgebildet ist. Auf diese Weise wird erreicht, dass das Sicherheitsschaltgerät auf mehrere voneinander unabhängige Sicherheitsfunktionen ansprechen kann, um einen elektrischen Antrieb in einen sicheren Zustand zu steuern. Zudem ist bei einem derartigen kompakten Sicherheitsschaltgerät die Gefahr eines Verdrahtungsfehlers gegenüber den bekannten Maßnahmen deutlich reduziert.

DE 14 15 980 A (Licentia Patent-Verwaltungs GmbH (DE)) 30. Januar 1969 beschreibt ein Verfahren zum Schalten von Wechselstrom- oder Drehstromstarkstromkreisen, bei dem zum Ein- und/oder Ausschalten eine Kombination elektronischer und mechanischer Schaltelemente benutzt wird, derart, dass die mechanischen Schaltelementen als metallische Überbrückungsschalter parallel zu den elektronischen Schaltelementen und/oder als Trennschalter in Reihe mit ihnen liegen, wobei die Steuerimpulse auf die elektronischen und mechanischen Schaltelemente derart zeitlich aufeinander abgestimmt sind, dass die mechanischen Schaltelemente lichtbogenfrei oder lichtbogenarm arbeiten, wobei die Schließung der parallel liegenden mechanischen Überbrückungsschalter und/oder die Öffnung der in Reihe liegenden mechanischen Trennschalter durch automatisch wirkende zeitabhängige Steuereinrichtungen verhindert wird, wenn der Starkstromkreis in schneller Folge, insbesondere schneller als 1 bis 10 s, hintereinander ein- und ausgeschaltet wird.

DE 10 2006 038209 A1 (Siemens AG (DE)) 21. Februar 2008 beschreibt ein Verfahren und eine Vorrichtung zum Betrieb eines spannungsgesteuerten Elektromotors, wobei der Elektromotor mit zumindest einer Ausgangsspannung eines Verstärkers beaufschlagt wird und der Verstärker mit einer Versorgungsspannung versorgt wird, wobei die Versorgungsspannung durch ein Messmittel erfasst wird und zumindest eine Ausgangsspannung des Verstärkers in Abhängigkeit von Betriebsgrößen des Elektromotors und der erfassten Versorgungsspannung ermittelt wird. Durch die Berücksichtigung der Versorgungsspannung können Ungleichförmigkeiten des von dem Elektromotor abzugebenden Drehmoments vermieden werden.

DE 33 17 964 A1 (Magnet Bahn GmbH (DE)) 22. November 1984 beschreibt ein Hybridschütz mit einem Hauptschütz, dem eine Serienschaltung aus einem Hilfsschütz und einer Thyristoreinrichtung parallel geschaltet ist. Das Hybridschütz ist als Abschnittsschalter für einzelne Langstatorabschnitte eines elektromotorischen Linearantriebs vorgesehen.

DE 196 01 540 A1 (Mitsubishi Electric Corp (JP)) 14. November 1996 beschreibt einen Schaltungsunterbrecher für ein Verteilungssystem, umfassend:
einen Halbleiterschalter vom Nicht-Selbstauslöschungs-Typ, der in dem Verteilungssystem vorgesehen ist;
ein Strombegrenzungselement, welches zu dem Halbleiterhalter zum Unterdrücken eines Fehlerstroms in Reihe geschaltet ist, wobei der Halbleiterschalter und das Strombegrenzungselement eine Reihenschaltung bilden; und
einen Hochgeschwindigkeitsschalter vom mechanischen Typ, der zu der Reihenschaltung des Halbleiterschalters und des Strombegrenzungselements parallel geschaltet ist;
wobei beim Auftreten eines Fehlers in dem Verteilungssystem ein durch das Verteilungssystem fließender elektrischer Strom von dem mechanischen Hochgeschwindigkeitsschalter an die Reihenschaltung kommutiert wird.

DE 12 27 109 B (Licentia GmbH) 20. Oktober 1966 beschreibt einen mechanisch arbeitenden Schalter für Mehrphasenwechselstrom, bei dem parallel zur Kontaktstrecke jeder Phase ein elektrisches Ventil mit gegenüber der Betriebsspannung verschwindend kleiner Schwellspannung von etwa größenordnungsmäßig 1 V liegt, wobei die Durchlassrichtung der Ventile aller Phasen gleiche Richtung, bezogen auf den Verbraucher, aufweist und die Öffnung der mechanischen Schaltstrecken kurz vor dem Nulldurchgang einer Stromhalbwelle in Durchlassrichtung der Ventile erfolgt, so dass auf Grund einer an sich bekannten synchronen Steuerung die gesamte Lichtbogenbrenndauer ein Minimum wird.

DE 23 21 635 A1 (EMF Corp) 21. November 1974 beschreibt ein elektrodynamisches Bremssystem für einen wenigstens an eine erste und zweite Stromversorgungsleitung angeschalteten Wechselstrommotor, gekennzeichnet durch:
a) einen ersten Unterbrecher in wenigstens einer der Stromversorgungsleitungen zur Abschaltung des Netzstromes vom Motor,
b) eine Leitung parallel zum ersten Unterbrecher und diesen überbrückend,
c) einen Gleichrichter parallel zum Motor, der außerdem die andere der Stromversorgungsleitungen mit der Parallelleitung verbindet,
d) einen zweiten Unterbrecher, der in der Parallelleitung liegt zwischen der Verbindung der Parallelleitung mit der Stromversorgungsleitung und der Verbindung des Gleichrichters mit der Parallelleitung,
e) einen dritten Unterbrecher, der in der Parallelleitung liegt zwischen dem Motor und der Verbindung des Gleichrichters mit der Parallelleitung,
f) eine strombegrenzende Reaktanz, die in der Parallelleitung liegt zwischen dem zweiten Unterbrecher und der Verbindung des Gleichrichters mit der Parallelleitung, wobei
g) der zweite und der dritte Unterbrecher den Kreis im Wesentlichen gleichzeitig unterbrechen.

Bei Schaltgeräten mit Notabschaltung des dem Schaltgerät nachgeschalteten Motors ist ein mögliches Abschaltprinzip, die Versorgungsspannung des Schaltgeräts mittels eines in den Versorgungsstrang zwischen der Versorgungsquelle und dem Versorgungsanschluss zwischengeschalteten Schaltgeräts (z.B. ein Not-Aus-Schaltgerät) abzuschalten. Funktionsbedingt fallen durch das Wegschalten der Versorgungsspannung die elektromechanischen Schalter des Schaltgerätes selbsttätig in den AusZustand (d.h. die Schalter sind geöffnet). Auf diese Weise wird bei einem Wegschalten der Versorgungsspannung die über das Schaltgerät zum Motor geführte Energiezufuhr abgeschaltet, so dass der Motor sicher ausgeschaltet wird. Durch das Abschalten der Versorgungsquelle und dem automatischen Öffnen der Schalter bildet sich an den Schaltern ein Abschaltlichtbogen, welcher einen starken Verschleiß an den Schaltern verursacht, so dass die Anzahl derartiger Schaltspiele bei den Schaltgeräten üblicherweise begrenzt ist.

Der Erfindung liegt die Aufgabe zugrunde ein Schaltgerät bereitzustellen, welches eine erhöhte Anzahl an Schaltspielen, insbesondere bezüglich eines Schaltvorgangs aufgrund eines Abschaltens der Versorgungsspannung am Versorgungsanschluss, aufweist. Das Schaltgerät soll insbesondere ein sicheres Abschalten eines dem Schaltgerät nachgeschalteten Elektromotors sicherstellen.

Diese Aufgabe wird gelöst durch eine Vorrichtung gemäß Anspruch 1, d.h. durch ein Schaltgerät, mit genau einer Steuereinheit, einem Versorgungsanschluss und einer ersten Strombahn, die mit einem Versorgungsnetz verbunden ist und einen ersten elektromechanischen Schalter und eine in Reihe zum ersten Schalter geschaltete Parallelschaltung eines zweiten elektromechanischen Schalters mit einem Halbleiterschalter umfasst, wobei die Steuereinheit ein Schaltsignal für den ersten Schalter, den zweiten Schalter und den Halbleiterschalter ausgeben kann, wobei der erste und zweite Schalter bei Vorliegen eines Schaltsignals im geschlossenen Schaltzustand gehalten wird, wobei die Steuereinheit über den Versorgungsanschluss die Energie für die Schaltsignale bezieht, wobei das Schaltgerät einen Energiespeicher und eine Messvorrichtung umfasst, wobei die Steuereinheit mittels der Messvorrichtung die über den Versorgungsanschluss erfolgende Energieversorgung überwachen kann, wobei die Steuereinheit, sofern die über den Versorgungsanschluss erfolgende Energieversorgung durch eine Versorgungsquelle in einen kritischen Bereich fällt, mittels der Energie des Energiespeichers die Ausgabe der Schaltsignale derart steuert, dass in einem ersten Schritt der Halbleiterschalter elektrisch leitend geschaltet wird und anschließend der zweite Schalter geöffnet wird, und dass nach dem ersten Schritt in einem zweiten Schritt der Halbleiterschalter elektrisch nichtleitend geschaltet wird und anschließend der erste Schalter geöffnet wird, und ein Verfahren gemäß Anspruch 8, d.h. durch ein Verfahren eines Schaltgeräts, welches genau eine Steuereinheit, einen Versorgungsanschluss und eine erste Strombahn umfasst, wobei die erste Strombahn mit einem Versorgungsnetz verbunden ist und einen ersten elektromechanischen Schalter und eine in Reihe zum ersten Schalter geschaltete Parallelschaltung eines zweiten elektromechanischen Schalters mit einem Halbleiterschalter umfasst, wobei die Steuereinheit ein Schaltsignal für den ersten Schalter, den zweiten Schalter und den Halbleiterschalter ausgeben kann, wobei der erste und zweite Schalter bei Vorliegen eines Schaltsignals im geschlossenen Schaltzustand gehalten wird, wobei die Steuereinheit über den Versorgungsanschluss die Energie für die Schaltsignale bezieht, wobei das Schaltgerät einen Energiespeicher und eine Messvorrichtung umfasst, wobei die Steuereinheit mittels der Messvorrichtung die über den Versorgungsanschluss erfolgende Energieversorgung überwacht, wobei die Steuereinheit, wenn die über den Versorgungsanschluss erfolgende Energieversorgung durch eine Versorgungsquelle in einen kritischen Bereich fällt, mittels der Energie des Energiespeichers die Ausgabe der Schaltsignale derart steuert, dass in einem ersten Schritt der Halbleiterschalter elektrisch leitend geschaltet wird und anschließend der zweite Schalter geöffnet wird, und dass nach dem ersten Schritt in einem zweiten Schritt der Halbleiterschalter elektrisch nichtleitend geschaltet wird und anschließend der erste Schalter geöffnet wird.

Vorteilhafte Weiterbildungen der Erfindung sind in den abhängigen Ansprüchen 2 bis 7 sowie 9 angegeben.

Im aktiven Betrieb des dem Schaltgerät nachgeschalteten Elektromotors erfolgt über die erste Strombahn die Energiezufuhr für den Elektromotor.

Bei Vorliegen des Schaltsignals nimmt der erste und zweite Schalter den geschlossenen Schaltzustand ein. Wird das Schaltsignal am ersten und/oder zweiten Schalter abgeschaltet; d.h. am Schalter liegt kein Schaltsignal an, so nimmt der entsprechende Schalter automatisch den geöffneten Schaltzustand ein. Bei einem Schaltsignal liegt insbesondere eine Spannung über dem Steuerstromkreis des Schalters an, insbesondere ca. 12 Volt. Bei keinem Schaltsignal liegt insbesondere keine Spannung über dem Steuerstromkreis des Schalters an.

Die Steuereinheit kann insbesondere mittels der Messvorrichtung die über den Versorgungsanschluss erfolgende Energieversorgung für das Schaltsignal der Steuereinheit überwachen.

Durch die Überwachung der über den Versorgungsanschluss erfolgenden Energieversorgung mittels der Messvorrichtung kann bei einem Absinken der Versorgungsspannung in einen, vorzugsweise in der Steuereinheit oder Messvorrichtung hinterlegten, kritischen Bereich ein geregeltes Abschalten der über die erste Strombahn erfolgenden Energieversorgung des nachgeschalteten Elektromotors erfolgen.

Der kritische Bereich wird vorzugsweise mittels eines Referenzwertes vom ordnungsgemäßen Bereich, in welchem eine ordnungsgemäße Energieversorgung über den Versorgungsanschluss vorliegt, getrennt. Der Referenzwert ist somit ein Schwellwert bzw. Schwellwertbereich. Der Referenzwert ist insbesondere derart bemessen, dass, sofern der Referenzwert überschritten wird, eine ausreichende Energieversorgung über den Versorgungsanschluss erfolgt, so dass eine ordnungsgemäße Schaltsignalausgabe durch die Steuereinheit sichergestellt ist, und sofern der Referenzwert unterschritten wird, eine Energieversorgung über den Versorgungsanschluss erfolgt, welche eine ordnungsgemäße Schaltsignalausgabe durch die Steuereinheit gefährdet, insbesondere nicht ermöglicht.

Der kritische Bereich charakterisiert insbesondere einen Spannungsbereich am Versorgungsanschluss, welcher unterhalb von maximal ca. 70%, vorzugsweise ca. 50%, der am Versorgungsanschluss anzuschließenden maximal zulässigen Spannung liegt.

Die Messvorrichtung ist insbesondere eine Vorrichtung zum Messen der am Versorgungsanschluss anliegenden Versorgungsspannung, so dass die Steuereinheit mittels der Messvorrichtung die über den Versorgungsanschluss anliegende Versorgungsspannung überwachen kann. Die Messung mittels der Messvorrichtung findet insbesondere im Bereich zwischen den Anschlussstellen des Versorgungsanschlusses und dem Energiespeicher statt.

Die Steuereinheit selbst kann den Energiespeicher umfassen.

Über den Versorgungsanschluss erfolgt vorzugsweise lediglich eine geräteinterne Energieversorgung des Schaltgeräts.

Vorzugsweise liegen am Versorgungsanschluss im ordnungsgemäßen Betrieb des Schaltgeräts ca. 24 Volt an.

Der Halbleiterschalter ist vorzugsweise ein Triac oder zwei antiparallel geschaltete Thyristoren.

Wurde eine kritische Energieversorgung mittels des Messmittels detektiert, so erfolgt die Ansteuerung mittels der Steuereinheit derart, dass im ersten Schritt der Halbleiterschalter elektrisch leitend geschaltet wird und der zweite Schalter nach dem Schließen des Halbleiterschalters geöffnet. Im ersten Schritt bleibt der erste Schalter geschlossen. Im zweiten Schritt wird zunächst der Halbleiterschalter elektrisch nichtleitend geschaltet und anschließend der erste Schalter geöffnet. Die erforderliche Energie zur Ausgabe der notwendigen Schaltsignale für den ersten und zweiten Schritt bezieht die Steuereinheit vom Energiespeicher.

Der mit der Erfindung erzielte Vorteil besteht darin, dass mit geringem zusätzlichem Hardwareaufwand im Schaltgerät ein verbessertes Schaltverhalten erzielt werden kann. Insbesondere kann bezüglich einer Notabschaltung über den Versorgungsanschluss eine erhöhte Anzahl an Schaltspielen für das Schaltgerät erzielt werden. Der durch ein Abschalten der Versorgungsspannung an den Schaltern üblicherweise erfolgende Verschleiß kann durch das gesteuerte Abschalten verhindert werden. Die hierzu erforderlich Energie für das Schaltsignal wird durch den Energiespeicher bereitgestellt.

In einer vorteilhaften Ausführungsform der Erfindung kann der Energiespeicher über den Versorgungsanschluss aufgeladen werden. Der Energiespeicher umfasst vorzugsweise mindestens einen Kondensator, welcher mit dem Versorgungsanschluss elektrisch leitend verbunden ist.

In einer weiteren vorteilhaften Ausführungsform der Erfindung ist der Energiespeicher derart ausgebildet, dass er die Ausgabe der erforderlichen Schaltsignale für die ersten und zweiten Schritte sicherstellt.

In einer weiteren vorteilhaften Ausführungsform der Erfindung umfasst das Schaltgerät eine zweite Strombahn, welche mit dem Versorgungsnetz verbunden ist und einen ersten elektromechanischen Schalter und eine in Reihe zum ersten Schalter geschaltete Parallelschaltung eines zweiten elektromechanischen Schalters mit einem Halbleiterschalter umfasst, wobei die Steuereinheit ein Schaltsignal für den ersten Schalter, den zweiten Schalter und den Halbleiterschalter der zweiten Strombahn ausgeben kann, wobei der erste und zweite Schalter der zweiten Strombahn bei Vorliegen eines Schaltsignals im geschlossenen Schaltzustand gehalten wird, wobei die Steuereinheit derart ausgebildet ist, dass sie, sofern die über den Versorgungsanschluss erfolgende Energieversorgung in den kritischen Bereich fällt, mittels der Energie des Energiespeichers die Ausgabe der Schaltsignale derart steuert, dass:
- in einem ersten Schritt der Halbleiterschalter der zweiten Strombahn elektrisch leitend geschaltet wird und anschließend der zweite Schalter der zweiten Strombahn geöffnet wird,
- nach dem ersten Schritt in einem zweiten Schritt der Halbleiterschalter der zweiten Strombahn elektrisch nichtleitend geschaltet wird und anschließend der erste Schalter der zweiten Strombahn geöffnet wird.

Die Ansteuerung der zweiten Strombahn mittels der Steuereinheit erfolgt vorzugsweise analog zur ersten Strombahn. Die zweite Strombahn kann analog zur ersten Strombahn ausgebildet sein.

Das Schaltgerät kann ferner eine dritte Strombahn umfassen. Die dritte Strombahn kann hierbei analog zur ersten oder zweiten Strombahn ausgebildet sein. Die Ansteuerung der Schalter der dritten Strombahn kann ebenso in analoger Weise zur ersten Strombahn erfolgen.

In einer weiteren vorteilhaften Ausführungsform der Erfindung ist die Steuereinheit derart ausgebildet, dass sie im zweiten Schritt den Halbleiterschalter im Stromnulldurchgang, der über ihn erfolgenden Energiezufuhr, in den elektrisch nichtleitenden Zustand schaltet.

In einer weiteren vorteilhaften Ausführungsform der Erfindung umfasst ein System, zum sicheren Betreiben eines Elektromotors, das beschriebene Schaltgerät, eine Versorgungsquelle und ein weiteres Schaltgerät, wobei das weitere Schaltgerät in den Versorgungsstrang der Versorgungsquelle zum Versorgungsanschluss des Schaltgeräts derart zwischengeschaltet ist, dass durch eine Betätigung des weiteren Schaltgeräts eine durch die Versorgungsquelle erfolgende Energieversorgung zum Schaltgerät unterbrochen wird.

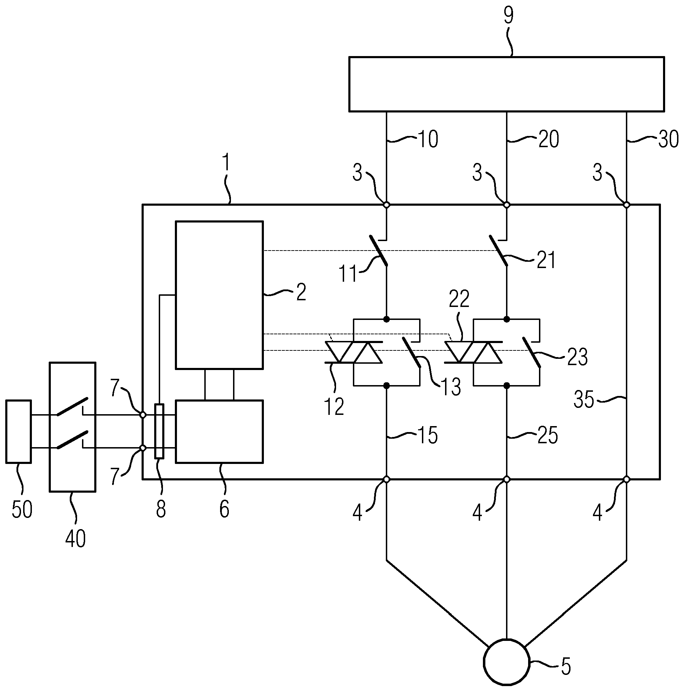

Im Folgenden werden die Erfindung und Ausgestaltungen der Erfindung anhand des in der Figur dargestellten Ausführungsbeispiels näher beschrieben und erläutert.

Die Figur zeigt eine schematische Darstellung eines Systems zum sicheren Betreiben eines Elektromotors 5. Das System umfasst ein Versorgungsnetz 9, den Elektromotor 5, ein Schaltgerät 1, eine Versorgungsquelle 50 und ein Not-Aus-Schaltgerät 40.

Das Schaltgerät 1 ist mit seinen drei eingangsseitigen Anschlussstellen 3 mit dem Versorgungsnetz 9 und mit seinen drei ausgangsseitigen Anschlussstellen 4 mit dem Elektromotor 5 verbunden. Der Elektromotor 5 ist ein Asynchronmotor. Das Versorgungsnetz 9 ist ein Dreiphasenwechselstromnetz einer industriellen Niederspannungsschaltanlage. Das Schaltgerät 1 ist ein Motorstarter 1, mittels welchem die Energiezufuhr des nachgeschalteten Elektromotors 5 gesteuert werden kann.

Eine erste Phase 10 des Versorgungsnetzes 9 ist mittels einer Leitung mit der eingangsseitigen Anschlussstelle 3 verbunden und wird über eine erste Strombahn 15 des Motorstarters 1 geräteintern zur ausgangsseitigen Anschlussstelle 4 geführt und anschließend mittels einer weiteren Leitung zum Elektromotor 5 geführt. Die erste Strombahn 15 des Motorstarters 1 verbindet geräteintern die eingangsseitige Anschlussstelle 3 des Motorstarters 1 mit der ausgangsseitigen Anschlussstelle 4 des Motorstarters 1. Die erste Strombahn 15 umfasst einen ersten elektromechanischen Schalter 11, einen Halbleiterschalter 12, hier ein Triac, und einen zweiten elektromechanischen Schalter 13. Der erste Schalter 11 ist in Serie zu der Parallelschaltung des Halbleiterschalters 12 mit dem zweiten Schalter 13 geschaltet. Über die erste Strombahn 15 wird folglich die erste Phase 10 des Versorgungsnetzes 9 zum Elektromotor 5 geführt.

Eine zweite Phase 20 des Versorgungsnetzes 9 ist mittels einer Leitung mit der eingangsseitigen Anschlussstelle 3 verbunden und wird über eine zweite Strombahn 25 des Motorstarters 1 geräteintern zur ausgangsseitigen Anschlussstelle 4 geführt und anschließend mittels einer weiteren Leitung zum Elektromotor 5 geführt. Die zweite Strombahn 25 des Motorstarters 1 verbindet geräteintern die eingangsseitige Anschlussstelle 3 des Motorstarters 1 mit der ausgangsseitigen Anschlussstelle 4 des Motorstarters 1. Die zweite Strombahn 25 umfasst einen ersten elektromechanischen Schalter 21, einen Halbleiterschalter 22, hier ein Triac, und einen zweiten elektromechanischen Schalter 23. Der erste Schalter 21 ist in Serie zu der Parallelschaltung des Halbleiterschalters 22 mit dem zweiten Schalter 23 geschaltet. Über die zweite Strombahn 25 wird folglich die zweite Phase 20 des Versorgungsnetzes 9 zum Elektromotor 5 geführt.

Eine dritte Phase 30 des Versorgungsnetzes 9 ist mittels einer Leitung mit der eingangsseitigen Anschlussstelle 3 verbunden und wird über eine dritte Strombahn 35 des Motorstarters 1 geräteintern zur ausgangsseitigen Anschlussstelle 4 geführt und anschließend mittels einer weiteren Leitung zum Elektromotor 5 geführt. Die dritte Strombahn 35 des Motorstarters 1 verbindet geräteintern die eingangsseitige Anschlussstelle 3 des Motorstarters 1 mit der ausgangsseitigen Anschlussstelle 4 des Motorstarters 1. Der abgebildete Motorstarter 1 ist ein 2-phasig gesteuerter Motorstarter 1, so dass die dritte Strombahn eine beständige geräteinterne elektrische Kontaktierung zwischen der eingangsseitigen und ausgangsseitigen Anschlussstelle 3,4 bildet. Es ist jedoch ebenso denkbar, dass die dritte Strombahn 35 ebenso mindestens einen Schalter umfasst oder analog zur ersten und/oder zweiten Strombahn 15,25 des Motorstarters 1 ausgebildet ist.

Der Motorstarter 1 umfasst eine Steuereinheit 2 mittels welcher die Schaltstellung der elektromechanischen Schalter 11,13,21,23 und der Halbleiterschalter 12,22 gesteuert wird. Hierfür kann die Steuereinheit 2 Schaltsignale an die Schalter 11,12,13,21,22,23 ausgeben. Durch das Schaltsignal wird eine Spannung am Schalter 11,12,13,21,22,23 angelegt. Die elektromechanischen Schalter 11,13,21,23 sind mit einer Federkraft beaufschlagt, so dass sie zum Halten der geschlossenen Stellung mit dem Schaltsignal angesteuert werden müssen, da sie ansonsten selbständig den geöffneten Schaltzustand einnehmen. D.h. sobald das Schaltsignal am elektromechanischen Schalter 11,13,21,23 entfernt wird, nimmt dieser automatisch die geöffnete Schaltstellung ein. Mittels der Steuereinheit 2 kann der jeweilige Halbleiterschalter 12,22 in einen elektrisch leitenden Zustand und einen elektrisch nicht leitenden Zustand (gesperrten Zustand) geschaltet werden. Im elektrisch nicht leitenden Zustand des Halbleiterschalters 12,22 wird die Energieübertragung über den Halbleiterschalter 12,22 gesperrt.

Die ersten elektromechanischen Schalter 13,23 sind Schließer eines ersten Relais. Die zweiten elektromechanischen Schalter 11,21 sind Schließer eines zweiten Relais. Es ist jedoch ebenso denkbar, dass die einzelnen Schalter oder lediglich die ersten oder zweiten Schalter 11,13,21,23 mittels eines separaten Relais angesteuert werden.

Der Motorstarter 1 bezieht über seinen Versorgungsanschluss 7 die geräteinterne Energieversorgung. Hierfür ist der Versorgungsanschluss 7 mittels zweier Leiter mit einer Versorgungsquelle 50, welche z.B. ca. 24 Volt bereitstellt, verbunden. Am Versorgungsanschluss 7 liegt somit bei einer bestehenden elektrisch leitenden Verbindung zur Versorgungsquelle 7 eine Versorgungsspannung von ca. 24 Volt an. Mittels der über den Versorgungsanschluss 7 bezogenen elektrischen Energie kann die Steuereinheit 2 die erforderlichen Schaltsignale an die jeweiligen Schalter 11,12,13,21,22,23 ausgegeben.

Innerhalb des Motorstarters ist der Versorgungsanschluss 7 mit der Steuereinheit 2 verbunden, so dass die Steuereinheit 2 hierüber die elektrische Energie für die Schaltsignale beziehen kann. Der Motorstarter 1 umfasst ferner einen Energiespeicher 6, welcher ebenso geräteintern mit dem Versorgungsanschluss 7 verbunden ist und der Steuereinheit 2 Energie für die Schaltsignale bereitstellen kann. Der Energiespeicher 6 ist ein Kondensator, welcher über den Versorgungsanschluss 7 aufgeladen wird.

Zwischen dem Versorgungsanschluss 7 und dem Energiespeicher 6 ist eine Messvorrichtung 8 des Motorstarters 1 angeordnet, mittels welcher die am Versorgungsanschluss 7 anliegende Versorgungsspannung ermittelt werden kann. Die Steuereinheit 2 kann somit mittels der Messvorrichtung 8 die über den Versorgungsanschluss 7 erfolgende Energieversorgung der Steuereinheit überwachen.

Hierbei wird die mittels der Messvorrichtung 8 ermittelte Versorgungsspannung mit einem in der Messvorrichtung 8 hinterlegten Referenzwert verglichen. Liegt die ermittelte Versorgungsspannung oberhalb des Referenzwertes, so erfolgt eine ausreichende Energieversorgung über den Versorgungsanschluss 7, so dass eine ordnungsgemäße Schaltsignalausgabe durch die Steuereinheit 2 sichergestellt ist. Wird jedoch der Referenzwert unterschritten, so erfolgt über den Versorgungsanschluss 7 eine Energieversorgung, welche eine ordnungsgemäße Schaltsignalausgabe durch die Steuereinheit 2 gefährdet. Die über den Versorgungsanschluss 7 erfolgende Energieversorgung befindet sich somit im kritischen Bereich.

Der durch den Referenzwert gebildete Schwellwert bezüglich der überwachten Versorgungsspannung liegt bei 50% der am Versorgungsanschluss 7 anzuschließenden maximal zulässigen Spannung. Ergibt die Überwachung der Versorgungsspannung mittels der Messvorrichtung 8, dass am Versorgungsanschluss 7 eine Versorgungsspannung unterhalb von 50% der am Versorgungsanschluss anzuschließenden maximal zulässigen Spannung anliegt, so befindet sich die Energieversorgung im kritischen Bereich. Liegt ein derartiger Zustand vor, so gibt die Messvorrichtung 8 an die Steuereinheit 2 ein Warnsignal aus.

Zwischen der Versorgungsquelle 50 und dem Motorstarter 1 ist das Not-Aus-Schaltgerät 40 derart angeordnet, dass es die über die beiden Leiter erfolgende Energieversorgung des Motorstarters 1 unterbrechen kann. Das Not-Aus-Schaltgerät 40 umfasst hierfür jeweils zwei Schaltelemente, welche jeweils eine Leitung unterbrechen können.

Sofern am Versorgungsanschluss 7 eine ordnungsgemäße Versorgungsspannung anliegt kann der Motorstarter 1 für den nachgeschalteten Elektromotor 5 eine Energieversorgung herstellen. Die mittels der Messvorrichtung 8 ermittelte Versorgungsspannung liegt folglich nicht im kritischen Bereich.

Liegt ein laufender Elektromotor 5 im Nennbetrieb vor, so sind innerhalb des Motorstarters 1 die ersten Schalter 11,21 geschlossen, die Halbleiterschalter 12,22 elektrisch nicht leitend geschaltet und die zweiten Schalter 13,23 geschlossen.

Ein mögliches Abschaltprinzip des dem Motorstarter 1 nachgeschalteten Elektromotors 5 ist es, die Versorgungsspannung des Motorstarters 1 mittels des in den Versorgungsstrang zwischen der Versorgungsquelle 50 und dem Versorgungsanschluss 7 zwischengeschalteten Not-Aus-Schaltgeräts 40 abzuschalten. Hierfür wird das Not-Aus-Schaltgerät 40 betätigt, so dass es mindestens einen seiner Schaltelemente öffnet.

Erfolgt eine derartige Betätigung des Not-Aus-Schaltgeräts 40, so liegt über den Versorgungsanschluss 7 keine Spannung an. Die Versorgungsspannung am Versorgungsanschluss 7 fällt somit in den kritischen Bereich. Da die Steuereinheit 2 mittels der Messvorrichtung 8 die über den Versorgungsanschluss 7 erfolgende Energieversorgung überwacht, wird ein derartiger Zustandswechsel bezüglich der über den Versorgungsanschluss 7 erfolgenden Energieversorgung erkannt.

Die Steuereinheit 2 führt daraufhin selbständig ein geregeltes Abschalten des nachgeschalteten Elektromotors 5 durch. Die Energie zur Ausgabe der notwendigen Schaltsignale wird hierbei vom Energiespeicher 6 bezogen.

In einem ersten Schritt werden durch die Steuereinheit 2 die Halbleiterschalter 12,22 in den elektrisch leitenden Zustand geschaltet. Die ersten Schalter 11,21 werden weiterhin mittels eines Schaltsignals der Steuereinheit 2 angesteuert, so dass sie in der geschlossenen Stellung verweilen. Funktionsbedingt fallen durch das Wegschalten der Schaltsignale am ersten Relais die zweiten Schalter 13,23 selbsttätig in den geöffneten Zustand. Die Energieversorgung des Elektromotors 5 erfolgt somit weiterhin über den Motorstarter 1. Die Energie für die auszugebenden Schaltsignale (Halbleiterschalter 12,22 und ersten Schalter 11,21) während des ersten Schritts bezieht die Steuereinheit 2 aus dem Energiespeicher 6.

In einem auf den ersten Schritt folgenden zweiten Schritt werden durch die Steuereinheit 2 die Halbleiterschalter 12,22 im Stromnulldurchgang in den elektrisch nichtleitenden Zustand geschaltet. Es erfolgt somit ein lichtbogenfreies Unterbrechen der Energieversorgung über die erste und zweite Strombahn 15,25. Dieser Schaltvorgang erfolgt unmittelbar nachdem sichergestellt ist, dass die zweiten Schalter 13,23 geöffnet sind. Sobald die Energieversorgung über die Halbleiter 12,22 unterbrochen ist, ist die Energieversorgung zum nachgeschalteten Elektromotor 5 unterbrochen. Nachdem sichergestellt ist, dass die Energieversorgung über die Halbleiter 12,22 unterbrochen ist, wird das Schaltsignal vom zweiten Relais und somit von den ersten Schaltern 11,21 weggeschaltet. Funktionsbedingt fallen durch das Wegschalten des Schaltsignals am zweiten Relais die ersten Schalter 11,21 selbsttätig in den geöffneten Zustand. Die ersten Schalter 11,21 werden somit stromlos geöffnet. Die Energie für die auszugebenden Schaltsignale während des zweiten Schritts bezieht die Steuereinheit 2 aus dem Energiespeicher 6.

Durch eine ausreichend bemessene Pufferung der Versorgungsspannung im Energiespeicher 6 und eine interne Überwachung der am Versorgungsanschluss 7 anliegenden Versorgungsspannung, kann bei dem Abschalten der Versorgungsspannung ein definiertes Unterbrechen der Energieversorgung zum nachgeschalteten Elektromotor 5 erfolgen, ohne dass es zu einer Lichtbogenbildung an den Schaltern 11,13,21,23 kommt.

Sinkt durch Ausfall oder Abschalten der Versorgungsspannung die von dem Erfassungsmittel 8 erfasste Versorgungsspannung unter eine vorgegebene Schwelle (Referenzwert), so wird ein Warnsignal an die Steuereinheit 2 gegeben. Diese leitet unverzüglich das definierte Abschalten des Elektromotors 5 ein. Das definierte Abschalten entspricht vorzugsweise dem Abschaltvorgang, welchen das Schaltgerät 1 bei einem normalen Abschaltvorgang (betriebsmäßiges Abschalten des Elektromotors 5 über Steuereingang) über die Steuereinheit 2 durchführt.

Die Pufferung des Energiespeichers 6 ist derart ausgelegt, dass ausreichend Energie zum Ansteuern der Schalter 11,12,13,21,22,23 bis zum Ende des Abschaltvorgangs zur Verfügung steht. Auf diese Weise kann auch bei einer Notabschaltung ein regulärer Abschaltvorgang durchgeführt werden, ohne die mechanischen Schalter 11,13,21,23 zusätzlich zu belasten. Es erfolgt somit ein verschleißfreies Abschalten bei einem Nothalt, der durch Abschalten der Versorgungsspannung realisiert ist. Durch den definierten Abschaltvorgang über verschleißfreie Halbleiter und die Pufferung der Versorgungsspannung für die Dauer dieses Abschaltvorganges kann eine deutlich erhöhte Lebensdauer der mechanischen Schalter 11,13,21,23 und damit des gesamten Schaltgerätes 1 erreicht werden.

## Patentansprüche

1. Schaltgerät (1), mit genau einer Steuereinheit (2), einem Versorgungsanschluss (7) und einer ersten Strombahn (15), die mit einem Versorgungsnetz (9) verbunden ist und einen ersten elektromechanischen Schalter (11) und eine in Reihe zum ersten Schalter (11) geschaltete Parallelschaltung eines zweiten elektromechanischen Schalters (13) mit einem Halbleiterschalter (12) umfasst, wobei die Steuereinheit (2) ein Schaltsignal für den ersten Schalter (11), den zweiten Schalter (13) und den Halbleiterschalter (12) ausgeben kann, wobei der erste und zweite Schalter (11,13) bei Vorliegen eines Schaltsignals im geschlossenen Schaltzustand gehalten wird, wobei die Steuereinheit (2) über den Versorgungsanschluss (7) die Energie für die Schaltsignale bezieht,
**dadurch gekennzeichnet, dass**
das Schaltgerät (1) einen Energiespeicher (6) und eine Messvorrichtung (8) umfasst, wobei die Steuereinheit (2) mittels der Messvorrichtung (8) die über den Versorgungsanschluss (7) erfolgende Energieversorgung überwachen kann, wobei die Steuereinheit (2), sofern die über den Versorgungsanschluss (7) erfolgende Energieversorgung durch eine Versorgungsquelle (50) in einen kritischen Bereich fällt, mittels der Energie des Energiespeichers (6) die Ausgabe der Schaltsignale derart steuert, dass:
- in einem ersten Schritt der Halbleiterschalter (12) elektrisch leitend geschaltet wird und anschließend der zweite Schalter (13) geöffnet wird,
- nach dem ersten Schritt in einem zweiten Schritt der Halbleiterschalter (12) elektrisch nichtleitend geschaltet wird und anschließend der erste Schalter (11) geöffnet wird.

2. Schaltgerät nach Anspruch 1, wobei der Energiespeicher (6) über den Versorgungsanschluss aufgeladen werden kann.

3. Schaltgerät nach einem der vorhergehenden Ansprüche, wobei der Energiespeicher (6) derart ausgebildet ist, dass er die Ausgabe der erforderlichen Schaltsignale für die ersten und zweiten Schritte sicherstellt.

4. Schaltgerät nach einem der vorhergehenden Ansprüche, wobei das Schaltgerät eine zweite Strombahn (25) umfasst, welche mit dem Versorgungsnetz (9) verbunden ist und einen ersten elektromechanischen Schalter (21) und eine in Reihe zum ersten Schalter (21) geschaltete Parallelschaltung eines zweiten elektromechanischen Schalters (23) mit einem Halbleiterschalter (22) umfasst, wobei die Steuereinheit (2) ein Schaltsignal für den ersten Schalter (21), den zweiten Schalter (23) und den Halbleiterschalter (22) der zweiten Strombahn (25) ausgeben kann, wobei der erste und zweite Schalter (21,23) der zweiten Strombahn (25) bei Vorliegen eines Schaltsignals im geschlossenen Schaltzustand gehalten wird, wobei die Steuereinheit (2) derart ausgebildet ist, dass sie, sofern die über den Versorgungsanschluss (7) erfolgende Energieversorgung in den kritischen Bereich fällt, mittels der Energie des Energiespeichers (6) die Ausgabe der Schaltsignale derart steuert, dass:
- in einem ersten Schritt der Halbleiterschalter (22) der zweiten Strombahn (25) elektrisch leitend geschaltet wird und anschließend der zweite Schalter (23) der zweiten Strombahn (25) geöffnet wird,
- nach dem ersten Schritt in einem zweiten Schritt der Halbleiterschalter (22) der zweiten Strombahn (25) elektrisch nichtleitend geschaltet wird und anschließend der erste Schalter (21) der zweiten Strombahn (25) geöffnet wird.

5. Schaltgerät nach einem der vorhergehenden Ansprüche, wobei die Steuereinheit (2) derart ausgebildet ist, dass sie im zweiten Schritt den Halbleiterschalter (12,22) im Stromnulldurchgang, der über ihn erfolgenden Energiezufuhr, in den elektrisch nichtleitenden Zustand schaltet.

6. Schaltgerät nach einem der vorhergehenden Ansprüche, wobei über den Versorgungsanschluss lediglich eine geräteinterne Energieversorgung des Schaltgeräts erfolgt.

7. System, zum sicheren Betreiben eines Elektromotors (5), mit einem Schaltgerät (1) gemäß einem der Ansprüche 1 bis 6, und einem weiteren Schaltgerät (40), wobei das weitere Schaltgerät (40) in den Versorgungsstrang der Versorgungsquelle (50) zum Versorgungsanschluss (7) des Schaltgeräts (1) derart zwischengeschaltet ist, dass durch eine Betätigung des weiteren Schaltgeräts (40) eine durch die Versorgungsquelle (50) erfolgende Energieversorgung zum Schaltgerät (1) unterbrochen wird.

8. Verfahren eines Schaltgeräts (1), welches genau eine Steuereinheit (2), einen Versorgungsanschluss (7) und eine erste Strombahn (15) umfasst, wobei die erste Strombahn (15) mit einem Versorgungsnetz (9) verbunden ist und einen ersten elektromechanischen Schalter (11) und eine in Reihe zum ersten Schalter (11) geschaltete Parallelschaltung eines zweiten elektromechanischen Schalters (13) mit einem Halbleiterschalter (12) umfasst, wobei die Steuereinheit (2) ein Schaltsignal für den ersten Schalter (11), den zweiten Schalter (13) und den Halbleiterschalter (12) ausgeben kann, wobei der erste und zweite Schalter (11,13) bei Vorliegen eines Schaltsignals im geschlossenen Schaltzustand gehalten wird, wobei die Steuereinheit (2) über den Versorgungsanschluss (7) die Energie für die Schaltsignale bezieht,
**dadurch gekennzeichnet, dass**
das Schaltgerät (1) einen Energiespeicher (6) und eine Messvorrichtung (8) umfasst, wobei die Steuereinheit (2) mittels der Messvorrichtung (8) die über den Versorgungsanschluss (7) erfolgende Energieversorgung überwacht, wobei die Steuereinheit (2), wenn die über den Versorgungsanschluss (7) erfolgende Energieversorgung durch eine Versorgungsquelle (50) in einen kritischen Bereich fällt, mittels der Energie des Energiespeichers (6) die Ausgabe der Schaltsignale derart steuert, dass:
- in einem ersten Schritt der Halbleiterschalter (12) elektrisch leitend geschaltet wird und anschließend der zweite Schalter (13) geöffnet wird,
- nach dem ersten Schritt in einem zweiten Schritt der Halbleiterschalter (12) elektrisch nichtleitend geschaltet wird und anschließend der erste Schalter (11) geöffnet wird.

9. Verfahren des Schaltgeräts (1) nach Anspruch 8, wobei die Steuereinheit (2) im zweiten Schritt den Halbleiterschalter (12,22) im Stromnulldurchgang, der über ihn erfolgenden Energiezufuhr, in den elektrisch nichtleitenden Zustand schaltet.

## Claims

1. Switchgear (1) having precisely one control unit (2), one supply connection (7) and one first current path (15) which is connected to a supply network (9) and comprises a first electromechanical switch (11) and, connected in series to the first switch (11), a parallel connection of a second electromechanical switch (13) with a semiconductor switch (12), wherein the control unit (2) can output a switching signal for the first switch (11), the second switch (13) and the semiconductor switch (12), wherein, in the presence of a switching signal, the first and second switches (11, 13) are held in the closed switching state, wherein the control unit (2) draws the energy for the switching signals through the supply connection (7),
**characterised in that**
the switchgear (1) comprises an energy accumulator (6) and a measuring device (8), wherein the control unit (2) is capable of monitoring the energy supplied through the supply connection (7) by means of the measuring device (8), wherein, if energy supplied through the supply connection (7) reaches a critical range, the control unit (2) controls the output of the switching signals by means of the energy of the energy accumulator (6) such that:
- in a first step, the semiconductor switch (12) is switched to be electrically conducting and then the second switch (13) is opened,
- in a second step following the first step, the semiconductor switch (12) is switched to be electrically non-conducting and then the first switch (11) is opened.

2. Switchgear according to claim 1, wherein the energy accumulator (6) can be charged through the supply connection.

3. Switchgear according to one of the preceding claims,
wherein the energy accumulator (6) is designed such that it ensures the output of the switching signals required for the first and second steps.

4. Switchgear according to one of the preceding claims,
wherein the switchgear comprises a second current path (25), which is connected to a supply network (9) and comprises a first electromechanical switch (21) and, connected in series to the first switch (21), a parallel connection of a second electromechanical switch (23) with a semiconductor switch (22), wherein the control unit (2) can output a switching signal for the first switch (21), the second switch (23) and the semiconductor switch (22) of the second current path (25), wherein, in the presence of a switching signal, the first and second switches (21, 23) of the second current path (25) are held in the closed switching state, wherein the control unit (2) is designed such that, if energy supplied through the supply connection (7) reaches the critical range, it controls the output of the switching signals by means of the energy of the energy accumulator (6) such that:
- in a first step the semiconductor switch (22) of the second current path (25) is switched to be electrically conducting and then the second switch (23) of the second current path (25) is opened,
- in a second step following the first step the semiconductor switch (22) of the second current path (25) is switched to be electrically non-conducting and then the first switch (21) of the second current path (25) is opened.

5. Switchgear according to one of the preceding claims,
wherein the control unit (2) is designed such that, in the second step, at current zero of the energy supplied therethrough, it switches the semiconductor switch (12, 22) to the electrically non-conducting state.

6. Switchgear according to one of the preceding claims, wherein the supply connection is preferably only used for an internal energy supply to the switchgear.

7. System for the reliable operation of an electric motor (5), with a switchgear (1) according to one of claims 1 to 6 and a further switchgear (40), wherein the further switchgear (40) is inserted into the supply line of the power supply source (50) for the supply connection (7) of the switchgear (1) such that an actuation of the further switchgear (40) interrupts an energy supplied through the power supply source (50) to the switchgear (1).

8. Method for a switchgear (1) comprising a control unit (2), a supply connection (7) and a first current path (15), wherein the first current path (15) is connected to a supply network (9) and comprises a first electromechanical switch (11) and, connected in series to the first switch (11), a parallel connection of a second electromechanical switch (13) with a semiconductor switch (12), wherein the control unit (2) can output a switching signal for the first switch (11), the second switch (13) and the semiconductor switch (12), wherein, in the presence of a switching signal, the first and second switches (11, 13) are held in the closed switching state, wherein the control unit (2) draws the energy for the switching signals through the supply connection (7), **characterised in that**
the switchgear (1) comprises an energy accumulator (6) and a measuring device (8), wherein the control unit (2) monitors, by means of the measuring device (8), the energy supplied through the supply connection (7), wherein, if the energy supplied through the supply connection (7) reaches a critical range, the control unit (2) controls the output of the switching signals by means of the energy of the energy accumulator (6) such that:
- in a first step the semiconductor switch (12) is switched to be electrically conducting and then the second switch (13) is opened,
- in a second step following the first step the semiconductor switch (12) is switched to be electrically non-conducting and then the first switch (11) is opened.

9. Method for the switchgear (1) according to claim 8, wherein, in the second step, at current zero of the energy supplied therethrough, the control unit (2) switches the semiconductor switch (12, 22) to the electrically non-conducting state.

## Revendications

1. Appareil (1) de commutation ayant exactement une unité (2) de commande, une borne (7) d'alimentation et un premier trajet (15) de courant, qui est relié à un réseau (9) d'alimentation et qui comprend un premier interrupteur (11) électromécanique et un circuit parallèle, monté en série avec le premier interrupteur (11), d'un deuxième interrupteur (13) électromécanique et d'un interrupteur (12) à semi-conducteur, l'unité (2) de commande pouvant émettre un signal de commutation pour le premier interrupteur (11), le deuxième interrupteur (13) et l'interrupteur (12) à semi-conducteur, le premier et le deuxième interrupteurs (11, 13) étant, en présence d'un signal de commutation, maintenus à l'état de commutation fermé, l'unité (2) de commande fournissant, par la borne (7) d'alimentation, l'énergie pour les signaux de commutation, **caractérisé en ce que**
l'appareil (1) de commutation comprend un accumulateur (6) d'énergie et un dispositif (8) de mesure, l'unité (2) de commande pouvant, au moyen du dispositif (8) de mesure, contrôler l'alimentation en énergie s'effectuant par la borne (7) d'alimentation, l'unité (2) de commande commandant, pour autant que l'alimentation en énergie, par une source (50) d'énergie, s'effectuant par la borne (7) d'alimentation tombe dans une plage critique, l'émission des signaux de commutation au moyen de l'énergie de l'accumulateur (6) d'énergie, de manière :
- dans un premier stade, à rendre passant électriquement l'interrupteur (12) à semi-conducteur et à ouvrir ensuite le deuxième interrupteur (13),
- après le premier stade, dans un deuxième stade, à rendre non-passant électriquement l'interrupteur (12) à semi-conducteur et ensuite à ouvrir le premier interrupteur (11).

2. Appareil de commutation suivant la revendication 1, dans lequel l'accumulateur (6) d'énergie peut être chargé par la borne d'alimentation.

3. Appareil de commutation suivant l'une des revendications précédentes, dans lequel l'accumulateur (6) d'énergie est constitué de manière à assurer l'émission des signaux de commutation nécessaires pour les premiers et deuxièmes stades.

4. Appareil de commutation suivant l'une des revendications précédentes, dans lequel l'appareil de commutation comprend un deuxième trajet (25) de courant, qui est relié au réseau (9) d'alimentation et qui comprend un premier interrupteur (21) électromécanique et un circuit en parallèle, monté en série avec le premier interrupteur (21), d'un deuxième interrupteur (23) électromagnétique avec un interrupteur (22) à semi-conducteur, l'unité (2) de commande pouvant émettre un signal de commutation pour le premier interrupteur (21), le deuxième interrupteur (23) et l'interrupteur (22) à semi-conducteur du deuxième trajet (25) de courant, le premier et le deuxième interrupteurs (21, 13) du deuxième trajet (25) de courant étant, en présence d'un signal de commutation, maintenus à l'état de commutation fermé, l'unité (2) de commande étant constituée de manière à commander, pour autant que l'alimentation en énergie s'effectuant par la borne (7) d'alimentation, tombe dans la plage critique, l'émission des signaux de commutation au moyen de l'énergie de l'accumulateur (6) d'énergie, de manière :
- dans un premier stade, à rendre passant électriquement l'interrupteur (22) à semi-conducteur du deuxième trajet (25) de courant et à ouvrir ensuite le deuxième interrupteur (23) du deuxième trajet (25) de courant,
- après le premier stade, dans un deuxième stade, à rendre non-passant électriquement l'interrupteur (22) à semi-conducteur du deuxième trajet (25) de courant et ensuite à ouvrir le premier interrupteur (21) du deuxième trajet 25 de courant.

5. Appareil de commutation suivant l'une des revendications précédentes, dans lequel l'unité (2) de commande est constituée de manière à faire passer dans le deuxième stade l'interrupteur (12, 22) à semi-conducteur dans l'état non-passant électriquement au passage par zéro du courant, l'apport d'énergie s'effectuant par lui.

6. Appareil de commutation suivant l'une des revendications précédentes, dans lequel il s'effectue, par la borne d'alimentation, uniquement une alimentation en énergie interne à l'appareil de l'appareil de commutation.

7. Système pour faire fonctionner de manière sûre un moteur (5) électrique, comprenant un appareil (1) de commutation suivant l'une des revendications 1 à 6 et un autre appareil (40) de commutation, l'autre appareil (40) de commutation étant monté intermédiairement dans la ligne d'alimentation de la source (50) d'alimentation à la borne (7) d'alimentation de l'appareil (1) de commutation, de manière à interrompre, par un actionnement de l'autre appareil (40) de commutation, une alimentation en énergie de l'appareil (1) de commutation s'effectuant par la source (50) d'alimentation.

8. Procédé pour faire fonctionner un appareil (1) de commutation, qui comprend exactement une unité (2) de commande, une borne (7) d'alimentation et un premier trajet (15) de courant, le premier trajet (15) de courant étant relié à un réseau (9) d'alimentation, et comprenant un premier interrupteur (11) électromécanique et un circuit en parallèle, monté en série avec le premier interrupteur (11), d'un deuxième interrupteur (13) électromécanique avec un interrupteur (12) à semi-conducteur, l'unité (2) de commande pouvant émettre un signal de commutation pour le premier interrupteur (11), le deuxième interrupteur (13) et l'interrupteur (12) à semi-conducteur, le premier et le deuxième interrupteurs (11, 13) étant, en présence d'un signal de commutation, maintenus dans l'état de commutation fermé, l'unité (2) de commande fournissant, par la borne (7) d'alimentation, l'énergie pour les signaux de commutation,
**caractérisé en ce que**
l'appareil (1) de commutation comprend un accumulateur (6) d'énergie et un dispositif (8) de mesure, l'unité (2) de commande contrôlant, au moyen du dispositif (8) de mesure, l'alimentation en énergie s'effectuant par la borne (7) d'alimentation, l'unité (2) de commande commandant, lorsque l'alimentation en énergie par une source (50) d'énergie, s'effectuant par la borne (7) d'alimentation, tombe dans une plage critique, l'émission des signaux de commutation au moyen de l'énergie de l'accumulateur (6) d'énergie, de manière :
- dans un premier stade, à rendre passant électriquement l'interrupteur (12) à semi-conducteur et à ouvrir ensuite le deuxième interrupteur (13),
- après le premier stade, dans un deuxième stade, à rendre non-passant électriquement l'interrupteur (12) à semi-conducteur et ensuite à ouvrir le premier interrupteur (11).

9. Procédé pour faire fonctionner l'appareil (1) de commutation suivant la revendication 8, dans lequel l'unité (2) de commande met à l'état non-passant électriquement, dans le deuxième stade, l'interrupteur (12, 22) à semi-conducteur au passage par zéro du courant, l'apport d'énergie s'effectuant par lui.
